# EUROPEAN PATENT APPLICATION

(11) **EP 4 844 447 A1**
(43) Date of publication of application: **25.11.2026**
(21) Application number: 26177971.4
(22) Date of filing: 11.05.2026
(51) Int. Cl.: G01S 17/42, G01S 7/481, G01S 7/487, G01S 7/497, G01S 7/48

(54) **WIRE BOND MECHANISMS TO IMPROVE SIGNAL-TO-NOISE RATIOS AT OPTICAL SENSORS**

(30) Priority: 21.05.2025 US 202519214268
(71) Applicant: STMicroelectronics International N.V., 1228 Plan-les-Ouates, Geneva (CH)
(72) Inventor: NGUYEN, Wei Liang Keith, 343115 Singapore (SG); PHUA, Soo Fan, 362215 Singapore (SG); CACERES, Jelah Nieva, 750492 Singapore (SG)
(74) Representative: Casalonga

(57) **Abstract**

An optical ranging sensor, an electronic system comprising an optical receiving device, and means for blocking unwanted optical signals at an optical reference sensor are provided. An example optical ranging sensor includes an optical transmitter, a transmission aperture, and an optical reference sensor. The optical transmitter is configured to transmit an optical signal through the transmission aperture. The optical reference sensor is positioned to receive a portion of the optical signal, wherein a shortest aperture axis is defined between the transmission aperture and the optical reference sensor, and wherein a shortest transmitter axis is defined between the optical transmitter and the optical reference sensor. The optical ranging sensor further includes a diverted wire bond routed to intersect the shortest aperture axis to block unwanted optical signals transmitted through the transmission aperture from reaching the optical reference sensor without intersecting the shortest transmitter axis.

## Description

### TECHNOLOGICAL FIELD

Embodiments of the present disclosure relate generally to wire bonds in optical sensors, and more particularly, to utilizing wire bonds to improve signal-to-noise ratios at optical sensors.

### BACKGROUND

Optical sensors may be utilized in various electronic systems, including within ambient light sensors and optical ranging sensors. In general, optical ranging sensors have widespread applications across multiple industries due to their ability to measure distances, track objects, detect presence, and/or map environments with high precision. For example, optical ranging sensors may be used in consumer electronics for facial recognition, augmented reality, and enhanced focus of a camera. In robotics and autonomous vehicles, time-of-flight sensors may enable obstacle avoidance, improved navigation, and safety through real-time 3D mapping of a surrounding environment. In industrial automation, time-of-flight sensors may be used for precise object detection and monitoring. However, optical sensors may generate inaccurate results when unwanted optical signals (e.g., noise) are received.

Applicant has identified many technical challenges and difficulties associated with reducing unwanted optical signals received at an optical sensor. Through applied effort, ingenuity, and innovation, Applicant has solved problems related to reducing optical noise at an optical sensor by developing solutions embodied in the present disclosure, which are described in detail below.

### BRIEF SUMMARY

Various embodiments are directed to an example optical ranging sensor, an electronic system comprising an optical receiving device, and means for blocking unwanted optical signals (also called "spurious" or "parasitic" optical signals) at an optical reference sensor.

An example optical ranging sensor comprises an optical transmitter, a transmission aperture, and an optical reference sensor. The optical transmitter is configured to transmit an optical signal through the transmission aperture. The optical reference sensor is positioned to receive a portion of the optical signal, wherein a shortest aperture axis is defined between the transmission aperture and the optical reference sensor, and wherein a shortest transmitter axis is defined between the optical transmitter and the optical reference sensor. The optical ranging sensor further comprises a diverted wire bond routed to intersect the shortest aperture axis to block unwanted optical signals transmitted through the transmission aperture from reaching the optical reference sensor without intersecting the shortest transmitter axis.

In some embodiments, the optical ranging sensor further comprises a first contact pad and a second contact pad, and the diverted wire bond comprises a first end attached to the first contact pad and a second end attached to the second contact pad.

In some embodiments, the first contact pad and the second contact pad are both electrically grounded.

In some embodiments, the diverted wire bond is routed on a non-linear path between the first contact pad and the second contact pad to intersect the shortest aperture axis.

In some embodiments, the first contact pad provides an electrical connection to an electrical substrate and the second contact pad provides an electrical connection to the optical transmitter.

In some embodiments, the first contact pad is positioned on a first side of the shortest aperture axis and the second contact pad is positioned on a second side of the shortest aperture axis.

In some embodiments, the optical ranging sensor further comprises a second diverted wire bond routed to intersect the shortest aperture axis to block unwanted optical signals transmitted through the transmission aperture from reaching the optical reference sensor without intersecting the shortest transmitter axis.

In some embodiments, the first contact pad provides an electrical connection to an electrical substrate and the second contact pad provides an electrical connection to the optical reference sensor.

In some embodiments, a portion of the diverted wire bond is above a top surface of the optical transmitter and below a bottom surface of the transmission aperture.

In some embodiments, a bottom surface of the diverted wire bond is configured to reflect a portion of the optical signal onto the optical reference sensor.

Another aspect of the disclosure relates to an example electronic system.

The example electronic system comprises an optical transmission device and an optical received device. The optical transmission device comprises an optical transmitter and a transmission device housing. The optical receiving device is adjacent to the optical transmission device and comprises an optical receiver and a receiving device housing, and a shortest transmitter axis is defined between the optical transmitter and the optical receiver. The optical receiving device further comprises a diverted receiving device wire bond routed to intersect the shortest transmitter axis to block unwanted optical signals transmitted by the optical transmitter from reaching the optical receiver.

In some embodiments, the optical transmission device further comprises a diverted transmission device wire bond routed to intersect the shortest transmitter axis to block unwanted optical signals transmitted by the optical transmitter from reaching the optical receiver.

In some embodiments, the optical receiving device further comprises a first contact pad and a second contact pad, wherein the diverted receiving device wire bond comprises a first end attached to the first contact pad and a second end attached to the second contact pad.

In some embodiments, the first contact pad and the second contact pad are both electrically grounded.

In some embodiments, the diverted receiving device wire bond is routed on a non-linear path between the first contact pad and the second contact pad to intersect the shortest transmitter axis.

In some embodiments, the first contact pad is positioned on a first side of the shortest transmitter axis and the second contact pad is positioned on a second side of the shortest transmitter axis.

In some embodiments, the first contact pad provides an electrical connection to an electrical substrate and the second contact pad provides an electrical connection to the optical receiver.

In some embodiments, the optical receiving device comprises an ambient light sensor.

In some embodiments, the optical transmission device is a flash light.

Another aspect relates to an optical ranging sensor comprising means for blocking unwanted optical signals transmitted through a transmission aperture from striking an optical reference sensor with a diverted wire bond routed to intersect a shortest aperture axis without intersecting a shortest transmitter axis, wherein the transmission aperture is configured to enable transmission of an optical signal from an optical transmitter, wherein the optical reference sensor is positioned to receive a portion of the optical signal, wherein the shortest aperture axis is defined between the transmission aperture and the optical reference sensor, and wherein the shortest transmitter axis is defined between the optical transmitter and the optical reference sensor, is further provided.

### BRIEF DESCRIPTION OF THE DRAWINGS

Reference will now be made to the accompanying drawings. The components illustrated in the figures may or may not be present in certain embodiments described herein. Some embodiments may include fewer (or more) components than those shown in the figures in accordance with an example embodiment of the present disclosure.
FIG. 1 illustrates a cross-section of an example optical ranging sensor transmitting an optical signal at a target object.
FIG. 2 illustrates a perspective view of an example optical ranging sensor comprising diverted wire bonds in accordance with an example embodiment of the present disclosure.
FIG. 3 depicts a cross-section view of an example optical ranging sensor comprising diverted wire bonds in accordance with an example embodiment of the present disclosure.
FIG. 4 depicts a perspective view of an example optical ranging sensor comprising a non-linear diverted wire bond in accordance with an example embodiment of the present disclosure.
FIG. 5 depicts a perspective view of an example optical ranging sensor comprising example diverted wire bonds in accordance with an example embodiment of the present disclosure.
FIG. 6 depicts a perspective view of an example over-molded optical ranging sensor comprising diverted wire bonds in accordance with an example embodiment of the present disclosure.
FIG. 7 depicts a cross-section view of an example electronic device comprising an optical transmission device and an optical receiving device in accordance with an example embodiment of the present disclosure.

### DETAILED DESCRIPTION

Example embodiments will be described more fully hereinafter with reference to the accompanying drawings, in which some, but not all embodiments of the inventions of the disclosure are shown. Indeed, embodiments of the disclosure may be embodied in many different forms and should not be construed as limited to the embodiments set forth herein; rather, these embodiments are provided so that this disclosure will satisfy applicable legal requirements. Like numbers refer to like elements throughout.

Various example embodiments address technical problems associated with reducing unwanted optical signals received at an optical sensor, such as an optical receiving device and/or optical reference sensor. As understood by those of skill in the field to which the present disclosure pertains, there are numerous example scenarios in which an electronic system may benefit from reducing unwanted optical noise at an optical sensor.

For example, optical sensors may be utilized in various electronic systems, including within ambient light sensors and optical ranging sensors, such as time-of-flight sensors. In general, optical ranging sensors have widespread applications across multiple industries due to their ability to measure distances, track objects, detect presence, and/or map environments with high precision. For example, optical ranging sensors may be used in consumer electronics for facial recognition, augmented reality, and enhanced focus of a camera. In robotics and autonomous vehicles, optical ranging sensors may enable obstacle avoidance, improved navigation, and safety through real-time 3D mapping of a surrounding environment. In industrial automation, optical ranging sensors may be used for precise object detection and monitoring.

During operation, an optical ranging sensor transmits light from an optical transmitter toward a target object in an external environment. The transmitted light reflects off the target object and is received by an optical receiver, isolated from the optical transmitter, on the optical ranging sensor. Based on the time required for the transmitted light to travel to the target object, reflect off the target object, and travel back to the optical receiver, certain physical aspects of the target object may be determined, for example, the distance of the target object, the motion of the target object, the speed of the target object, surface properties of the target object, and so on.

An optical reference sensor proximate the optical transmitter is utilized to capture internally reflected transmitted light generated by the optical transmitter. The transmitted light captured at the optical reference sensor enables an optical ranging sensor to accurately determine the flight time of transmitted light reflected off a target object. To ensure the robust operation of the optical sensor, the amount of optical radiation reaching any receiver must have more signal (good optical radiation) as compared to noise (bad optical radiation), resulting in a higher signal-to-noise ratio, and improved performance. However, in some cases, the amount of transmitted light reaching the optical reference sensor is low, for example due to insufficient internal reflection within the module to the optical reference sensor, or due to the amount of noise reaching the optical reference sensor, for example due to poor blockage of ambient noise from the surroundings.

In some examples, various optical structures, packaging designs, and materials are used to reduce the amount of unwanted optical noise received at an optical sensor. For example, reflectors, baffles, and other structures may reduce unwanted optical signals reaching an optical sensor, and/or reduce unwanted reflections. However, some of these example may be unfeasible due to cost constraints, spatial constraints, and/or technological limitations. In addition, some of these examples may be in conflict with other requirements of an optical sensing device (e.g., optical ranging sensor). For example, it may be preferred that the optical sensing device packaging is highly reflective for good internal reflection to an optical reference receiver, but a low reflectivity is preferred for optical crosstalk mitigation (e.g., preventing reflections directly to an optical receiver without reflecting off a target object).

The various example embodiments described herein utilize various techniques to reduce unwanted optical signals received at an optical sensor. For example, in some embodiments, an optical sensing device comprises one or more diverted wire bonds. Diverted wire bonds are intentionally routed on an indirect path to block an optical path between the optical sensor and an unwanted optical signal source. For example, on an optical ranging sensor, a diverted wire bond may be routed to intersect a shortest aperture axis between a transmission aperture of the optical ranging sensor and an optical reference sensor. In this way, unwanted optical noise transmitted through the transmission aperture from the external environment may be prevented from interacting with the optical reference sensor. In addition, in some embodiments, a diverted wire bond may be routed such that the diverted wire bond enhances or enables desired optical signals to reach and interact with the optical reference sensor.

Diverted wire bonds may comprise a variety of forms. For example, in some embodiments, the diverted wire bonds may be routed in an indirect, non-linear path to intersect the shortest aperture axis, even if the path between contact pads is longer than a standard wire bond. In some embodiments, the diverted wire bonds may be routed to start at a contact pad on a first side of the shortest aperture axis and end at a contact pad on a second side of the shortest aperture axis. Still, in some embodiments, both ends of the diverted wire bonds may be electrically grounded, such that no electrical signal is transmitted through the diverted wire bond.

Diverted wire bonds may further be utilized in standalone optical receiving devices, such as ambient light sensors, to reduce the amount of unwanted optical noise received at an optical receiver of the optical receiving device. In addition, in some embodiments, the diverted wire bonds may be used in optical transmission devices. Diverted wire bonds may be used to direct transmitted optical signals from an optical transmitter, and/or block transmitted optical signals from transmitting in certain directions.

As a result of the herein described example embodiments, the unwanted optical noise received at an optical sensor may be greatly reduced. By reducing the optical noise received at an optical sensor, the signal-to-noise ratio of a received transmitted optical signal may be increased, and the accuracy of the optical sensor may be greatly improved.

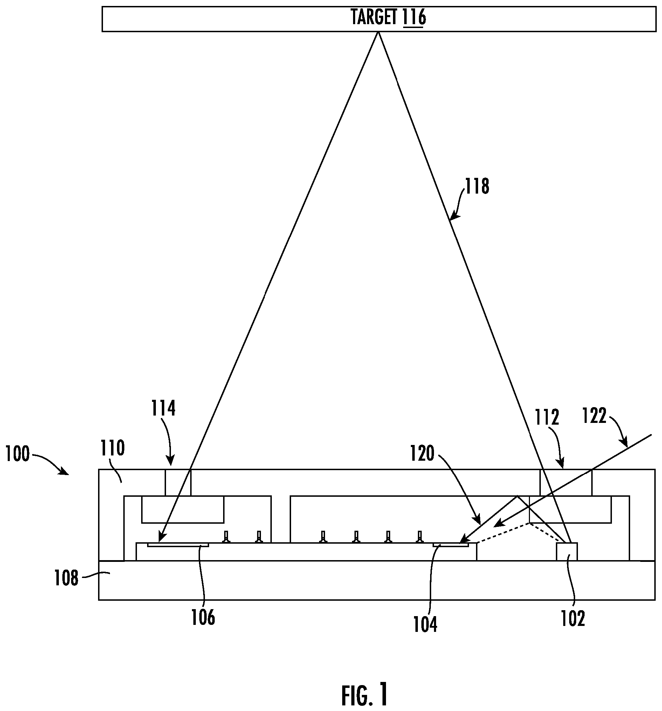

Referring now to FIG. 1, an example optical ranging sensor 100 is provided. As depicted in FIG. 1, the example optical ranging sensor 100 includes a housing cap 110 comprising a barrier wall dividing the optical ranging sensor 100 into two cavities, a transmission cavity and a receiving cavity. The transmission cavity includes an optical transmitter 102 and an optical reference sensor 104 attached to a substrate 108. The optical transmitter 102 is configured to output an optical signal 118 and is aligned with a transmission aperture 112 in the housing cap 110 such that the optical signal 118 is directed through a transmission lens and the transmission aperture 112 toward a target object 116.

The target object 116 reflects at least a portion of the optical signal 118 as a reflected optical signal 118 back toward the optical ranging sensor 100. The reflected optical signal 118 is received through a receiving opening 114 in the housing cap 110 and collected by an optical receiver 106 attached to the substrate 108. As depicted in FIG. 1, the receiving opening 114 includes an optional receiver lens configured to direct the reflected optical signal 118 into the receiving cavity and toward the optical receiver 106.

As depicted in FIG. 1, the operating environment of the optical ranging sensor 100 may include optical noise 122, such as ambient light. A portion of the optical noise 122 may enter through the transmission aperture 112 and interact with the optical reference sensor 104. Optical noise 122 received at the optical reference sensor 104 adversely affects the performance of the optical ranging sensor 100. For example, optical noise 122 received at the optical reference sensor 104 may reduce the signal-to-noise ratio (SNR) of the portion 120 of the optical signal 118 received at the reference sensor 104, thus, reducing the accuracy of the reference signal generated by the optical reference sensor 104.

As depicted in FIG. 1, the example optical ranging sensor 100 includes a housing cap 110. A housing cap 110 is any package, cover, container, or other covering configured to protect the internal electrical components and circuitry of the optical ranging sensor 100. A housing cap 110 may comprise plastic, ceramic, or other protective material. The housing cap 110 is attached to the substrate 108 to provide stability and further protect the internal electrical components of the optical ranging sensor 100.

As further depicted in FIG. 1, the optical ranging sensor 100 includes an optical transmitter 102. An optical transmitter 102 is any light source, such as a laser diode, a light-emitting diode, bulb, semiconductor device, or other photon-emitting structure configured to generate an optical signal 118. In some embodiments, an optical transmitter 102 may comprise a semiconductor laser diode, for example, a vertical cavity surface emitting laser (VCSEL) and/or an edge emitting laser diode. In general, an optical transmitter 102 may output a coherent light beam upon receipt of a current.

As further depicted in FIG. 1, the optical transmitter 102 is configured to output an optical signal 118. An optical signal 118 is any optical radiation transmitted by the optical transmitter 102 toward a target object 116 to determine characteristics related to the position and/or motion of the target object 116. In some embodiments, the optical signal 118 may be a pulsed laser signal. For example, the optical transmitter 102 may be configured to generate uniform laser pulses. Utilizing a pulsed laser signal may enable a controller to determine the time of flight of the optical signal 118 once the reflected optical signal 118 is received at the optical receiver 106. In some embodiments, the optical signal 118 may be a continuous wave laser signal. In such embodiments, the continuous wave laser signal may enable a controller to determine proximity of a target object 116 by correlating the proximity of the target object 116 with the phase change in the optical signal 118 as it is emitted by the optical transmitter 102, reflected off the target object 116, and subsequently received by the optical receiver 106. Characteristics related to the position and/or motion of target objects 116 may include the distance of the target object 116 from the optical sensor, the position of the target object 116, the speed of the target object 116, the direction of motion of the target object 116, and other similar characteristics related to the position of the target object 116 in the environment.

As further depicted in FIG. 1, the optical signal 118 is transmitted through a transmission aperture 112 defined by the housing cap 110. A transmission aperture 112 is any hole, slit, aperture, or other opening aligned with the optical transmitter 102 to facilitate the transmission of an optical signal 118 toward a target object 116. A transmission aperture 112 may or may not include optical features such as lenses, structures, beam shaping elements or light diffusers, or other features to direct the optical signal 118 toward a target object 116 and/or various portions of a target object 116.

As further depicted in FIG. 1, the example optical ranging sensor 100 includes a substrate 108. The substrate 108 is any structure configured to support the attachment of the components of the optical ranging sensor 100, including the housing cap 110. In some embodiments, the substrate 108 may comprise contact pads configured to connect the components of the optical ranging sensor 100 to a processor, controller, analog-to-digital converter, or other electrical components of an electronic system. In some embodiments, the optical transmitter 102, the optical reference sensor 104, and the optical receiver 106 may all be electrically coupled to the substrate 108 through wire bonds. In some embodiments, the substrate 108 may comprise a printed circuit board.

As further depicted in FIG. 1, the optical ranging sensor 100 includes an optical reference sensor 104. An optical reference sensor 104 is any light-sensitive optical sensor configured to produce a reference signal based on a portion of the optical signal 118 received from the optical transmitter 102. During operation of an optical ranging sensor 100, the optical transmitter 102 transmits an optical signal 118 toward a target object 116. A portion 120 of the optical signal 118 is directed toward the optical reference sensor 104. Thus, the received portion 120 of the optical signal 118 may be compared to the reflected optical signal 118 reflected off the target object 116. By comparing the reference signal produced by the optical reference sensor 104 with the electrical signal produced by the optical receiver 106, physical properties of the target object 116, including physical properties related to the position and motion of the target object 116 may be determined.

However, as further depicted in FIG. 1, the environment of the optical ranging sensor 100 may include optical noise 122. Optical noise 122 is any light or other optical radiation in the environment of the optical ranging sensor 100 that may enter into the transmission cavity through the transmission aperture 112 or another opening in the housing cap 110. Optical noise may comprise ambient light and/or light from other optical radiation sources. Optical noise 122 received by the optical reference sensor 104 may have adverse effects on the performance and accuracy of the optical ranging sensor 100, as the reference signal generated by the optical reference sensor 104 may be altered by the presence of optical noise 122 captured by the optical reference sensor 104.

As further depicted in FIG. 1, the optical signal 118 transmitted by the optical transmitter 102 is directed at a target object 116. A target object 116 is any object, structure, person, entity, or other item positioned in the line-of-sight of the optical signal 118 transmitted by the optical ranging sensor 100. In some embodiments, the optical ranging sensor 100 may be configured to determine one or more proximity characteristics of the target object 116, such as the spatial position, composition, proximity, motion, and/or speed of the target object 116.

As further depicted in FIG. 1, a certain portion of the optical signal 118 may reflect off the target object 116 as reflected optical radiation. Reflected optical radiation is any portion of the optical signal 118 transmitted by the optical transmitter 102 of the optical ranging sensor 100 that is reflected off the target object 116 and received by the optical receiver 106 of the optical ranging sensor 100. The reflected optical signal 118 is used to determine the physical characteristics of the target object 116.

As further depicted in FIG. 1, the optical ranging sensor 100 includes an optical receiver 106. An optical receiver 106 is any set of one or more photodiodes, integrated circuits, sensors, light sensing diodes, or other structures that produce an electric signal as a result of light received at the optical receiver 106. The electric current output from the optical receiver 106 may be used to determine the intensity or amplitude of the optical radiation striking the optical receiver 106. In some embodiments, the optical receiver 106 may be a light sensitive semiconductor diode that creates an electron-hole pair at the p-n junction when a photon of sufficient energy strikes the optical receiver 106.

In some embodiments, the optical receiver 106 may be further electrically connected to a processing device. The processing device may be configured to receive the electrical signal generated by the optical receiver 106 representing the intensity of reflected optical signal 118 received at the optical receiver 106 and the electrical signal generated by the optical reference sensor 104. In some embodiments, the processing device may determine a time-of-flight of the optical radiation and/or a change in phase of the optical radiation and determine one or more characteristics related to the physical position of the target object 116.

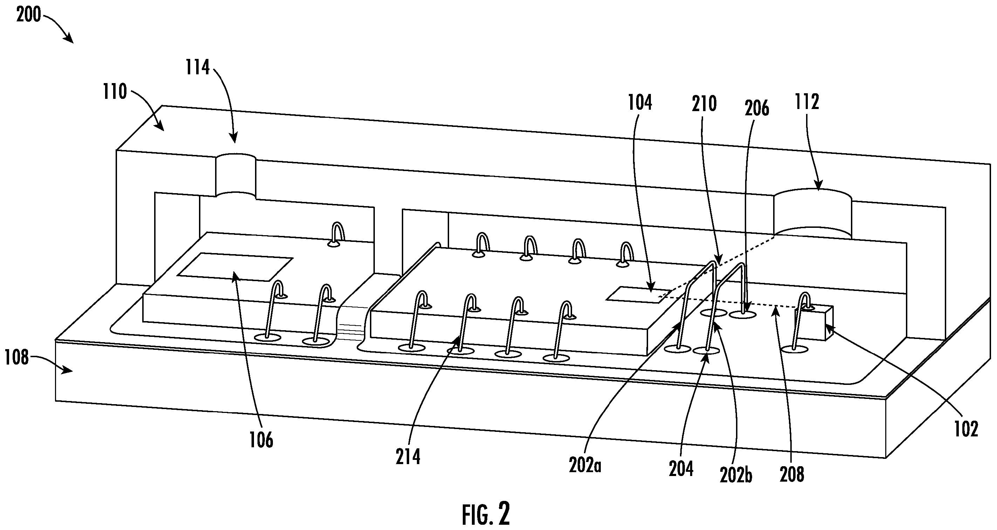

Referring now to FIG. 2, a perspective view of an example optical ranging sensor 200 comprising a plurality of diverted wire bonds 202a, 202b is provided. As depicted in FIG. 2, the example optical ranging sensor 200 includes a housing cap 110 comprising a barrier wall dividing the optical ranging sensor 200 into two cavities, a transmission cavity and a receiving cavity. The transmission cavity includes an optical transmitter 102 and an optical reference sensor 104 attached to a substrate 108. The optical transmitter 102 is aligned with a transmission aperture 112 in the housing cap 110. The example optical ranging sensor 200 further includes a receiving opening 114 in the housing cap 110 opening into a receiving cavity comprising an optical receiver 106 attached to the substrate 108 and aligned with the receiving opening 114.

As further depicted in FIG. 2, the example optical ranging sensor 200 includes a plurality of wire bonds 214 forming electrical connections at various contact pads between the optical reference sensor 104 and the substrate 108, between the optical receiver 106 and the substrate 108, and between the optical transmitter 102 and the substrate 108. In addition, the example optical ranging sensor 200 comprises a plurality of diverted wire bonds (e.g., diverted wire bond 202a, 202b).

In general, a wire bond 214 is a method used to create electrical connection between an integrated circuit or semiconductor device (e.g., optical reference sensor 104, optical receiver 106, optical transmitter 102) and a substrate 108 or other packaging. Wire bonds 214 may comprise aluminum, copper, silver, gold, or other similar conductive materials. Wire bonds 214 may be created using specialized equipment to weld fine wires of the conductive material to a contact pad. The wire bonding process may include techniques such as ultrasonic bonding, thermocompression bonding, or thermosonic bonding, depending on the materials used and the application. Various wire bond types may be formed, including ball bonding, wedge bonding, and other similar types.

As further depicted in FIG. 2, the example optical ranging sensor 200 includes a plurality of diverted wire bonds 202a, 202b. A diverted wire bond 202a, 202b may comprise any standard wire bond material, such as aluminum, copper, silver, gold, or other similar materials. In addition, a diverted wire bond 202a, 202b may be formed by any standard wire bonding technique, such as ultrasonic bonding, thermocompression bonding, or thermosonic bonding. Further, a diverted wire bond 202a, 202b may comprise any standard wire bond type, including ball bonding, wedge bonding, and other similar types.

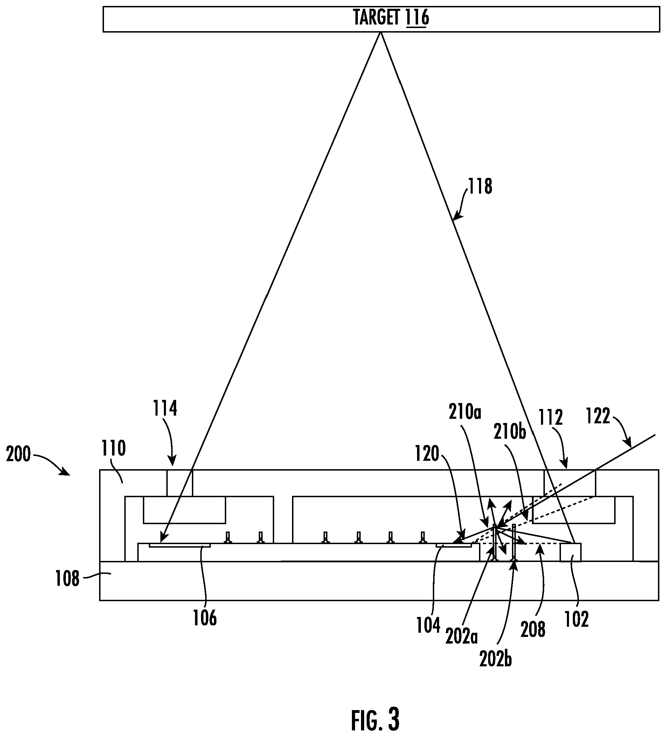

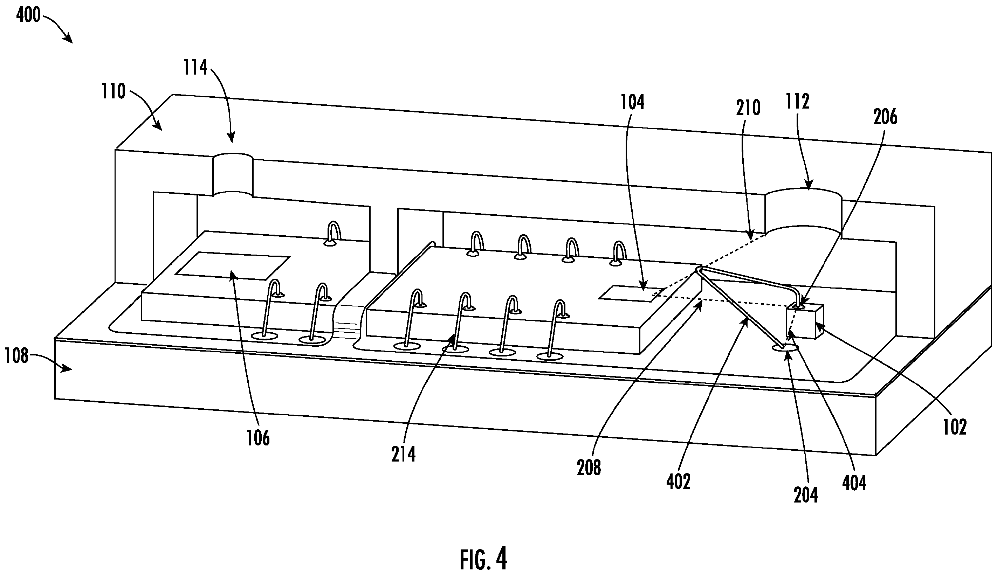

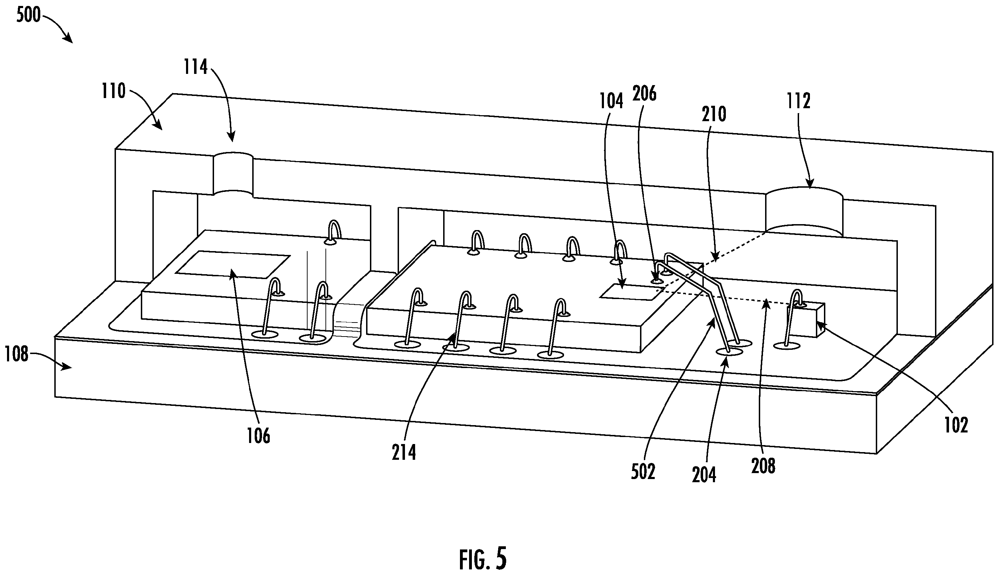

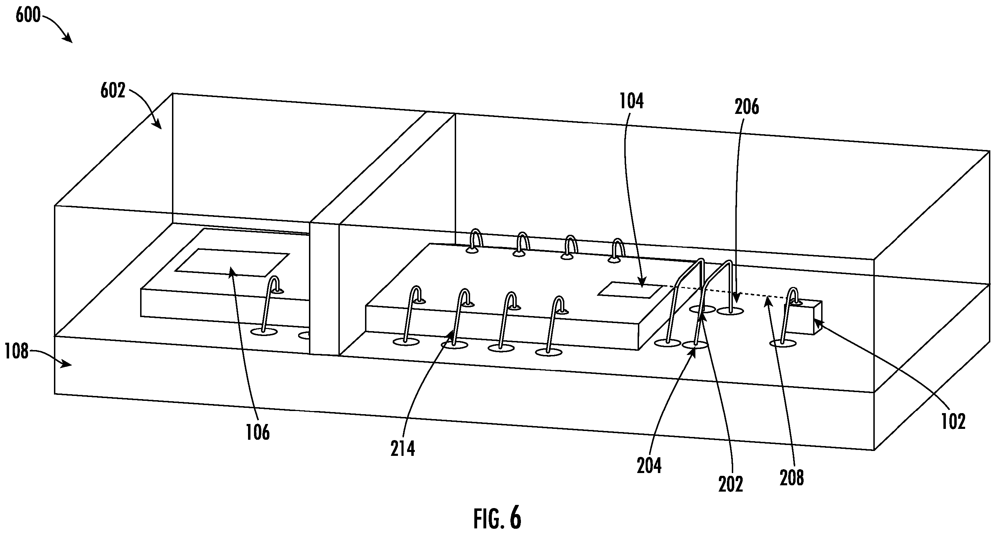

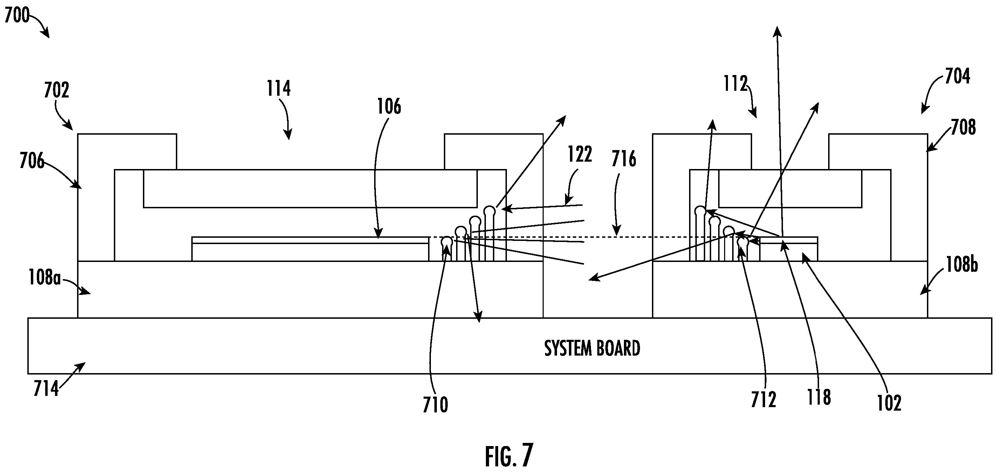

However, diverted wire bonds 202a, 202b are intentionally routed to improve the optical properties of an optical sensor or an optical sensor device (e.g., optical ranging sensor). For example, a diverted wire bond 202a, 202b may be diverted to block unwanted optical noise (e.g., optical noise 122 from striking an optical sensor (e.g., optical receiver 106, reference sensor 104). In addition, in some embodiments, a diverted wire bond 202a, 202b may aid in directing the transmission of optical signals (e.g., portion 120 of the optical signal 118). For example, a surface of a diverted wire bond 202a, 202b may reflect a reference portion (e.g., portion 120) of an optical signal toward an optical reference sensor 104, or a diverted wire bond 202a, 202b may direct an optical signal generated by an optical transmitter 102 toward a transmission aperture 112. Further example embodiments of example diverted wire bonds are described in relation to FIG. 3 (e.g., diverted wire bond 202a, 202b), FIG. 4 (e.g., diverted wire bond 402), FIG. 5 (e.g., diverted wire bond 502), FIG. 6 (e.g., diverted wire bond 202a, 202b), and FIG. 7 (e.g., diverted wire bond 710, diverted wire bond 712).

As depicted in FIG. 2, a shortest aperture axis 210 between the transmission aperture 112 and the reference sensor 104 is defined. The shortest aperture axis 210 comprises any straight line extending from any portion of the transmission aperture 112 to any portion of the receiving array of the reference sensor 104. As such the shortest aperture axis 210 represents any direct path optical noise (e.g., optical noise 122) may take from an external environment, through the transmission aperture 112, and to the reference sensor 104.

As further depicted in FIG. 2, a shortest transmitter axis 208 between the optical transmitter 102 and the reference sensor 104 is defined. The shortest transmitter axis 208 comprises any straight line extending from any portion of the emission surface of an optical transmitter 102 to any portion of the receiving array of the reference sensor 104.

As depicted in FIG. 2, the diverted wire bonds 202a, 202b comprise a first end attached to a first contact pad 204 and a second end attached to a second contact pad 206. The diverted wire bonds 202a, 202b are formed such that at least a portion of the diverted wire bond 202a, 202b intersects a shortest aperture axis 210. In applications where a portion of the optical signal is expected to travel directly from the optical transmitter 102 to the optical sensor 104, the diverted wire bond 202 should not block at least one shortest transmitter axis 208. In applications where a portion of the optical signal is not expected to travel directly from the optical transmitter 102 to the optical sensor 104, the diverted wire bond 202 may block the shortest transmitter axis 208. By positioning a diverted wire bond 202a, 202b to intersect a shortest aperture axis 210, various optical noise signals entering the transmission cavity of the optical ranging sensor 200 through the transmission aperture 112, may be blocked.

In addition, as depicted in FIG. 2, in some embodiments, the diverted wire bonds 202a, 202b may be formed with a height such that a portion of the diverted wire bond 202a, 202b is entirely above the shortest transmitter axis 208. By obtaining a height such that a portion of the diverted wire bond 202a, 202b is entirely above the shortest transmitter axis 208, a reference portion 120 of the optical signal 118 generated by the optical transmitter 102 may be enabled to pass under the diverted wire bond 202a, 202b to the reference sensor 104. In addition, the diverted wire bond 202a, 202b may aid the reference portion 120 of the optical signal 118 to be transmitted to the reference sensor 104. For example, the reference portion 120 may reflect off a bottom surface of the diverted wire bond 202a, 202b and reflect toward the reference sensor 104.

As further depicted in FIG. 2, the diverted wire bond 202a, 202b comprises a first end attached to a first contact pad 204 and a second end attached to a second contact pad 206. A contact pad 204 comprises any conductive surface on an integrated circuit or semiconductor device (e.g., optical reference sensor 104, optical receiver 106, optical transmitter 102, substrate 108). In some embodiments, a contact pad 204, 206 may provide an electrical connection to one or more components of an electrical system. For example, data and/or power signals may be transmitted to various electrical components via a contact pad 204, 206. As depicted in FIG. 2, the diverted wire bond 202a, 202b is positioned such that the first end is on a first side of the shortest aperture axis 210 and the second end is on a second side of the shortest aperture axis 210. In this way, at least a portion of the diverted wire bond 202a, 202b may intersect the shortest aperture axis 210 and block optical noise entering the transmission cavity of the optical ranging sensor 200. As shown in FIG. 2, in some embodiments, the diverted wire bond is perpendicular to the shortest aperture axis 210.

As further depicted in FIG. 2, in some embodiments, both the first contact pad 204 and the second contact pad 206 may be on the surface of the substrate 108. Indeed, in some embodiments, both the first contact pad 204 and the second contact pad 206 may be electrically grounded. In such an embodiment, the diverted wire bonds 202a, 202b carry no electrical signal. Instead, the diverted wire bonds 202a, 202b are formed to improve the optical properties of the optical ranging sensor 200, for example, by blocking optical noise and/or enabling the transmission of an optical signal.

Referring now to FIG. 3, a cross-section of an example optical ranging sensor 200 is provided. As depicted in FIG. 3, the example optical ranging sensor 200 includes a housing cap 110 comprising a barrier wall dividing the optical ranging sensor 200 into two cavities, a transmission cavity and a receiving cavity. The transmission cavity includes an optical transmitter 102 and an optical reference sensor 104 attached to a substrate 108. The optical transmitter 102 is aligned with a transmission aperture 112 in the housing cap 110. The example optical ranging sensor 200 further includes a receiving opening 114 in the housing cap 110 opening into a receiving cavity comprising an optical receiver 106 attached to the substrate 108 and aligned with the receiving opening 114.

As further depicted in FIG. 3, a first shortest aperture axis 210a and a second shortest aperture axis 210b are defined between the transmission aperture 112 and the reference sensor 104. In addition, a shortest transmitter axis 208 between the optical transmitter 102 and the reference sensor 104 is defined.

As further depicted in FIG. 3, the transmission cavity of the optical ranging sensor 200 comprises a plurality of diverted wire bonds 202a, 202b. Each diverted wire bond 202a, 202b is routed such that a portion of the diverted wire bond 202a, 202b intersects at least one shortest aperture axis 210a, 210b without intersecting a shortest transmitter axis 208. For example, as depicted in FIG. 3, a lateral portion of the diverted wire bond 202a intersects the shortest aperture axis 210a but is above the shortest transmitter axis 208. Similarly, a lateral portion of the diverted wire bond 202b intersects the shortest aperture axis 210b but is above the shortest transmitter axis 208.

Thus, as depicted in FIG. 3, the plurality of diverted wire bonds 202a, 202b block at least a portion of the optical noise 122. In contrast, a reference portion 120 of the optical signal 118 is reflected onto the surface of the optical reference sensor 104. In this way, the intensity of the reference portion 120 of the optical signal 118 is increased while the intensity of the optical noise 122 is decreased, increasing the signal-to-noise ratio of the reference portion 120 of the optical signal 118 received at the reference sensor 104.

Referring now to FIG. 4, a perspective view of an example optical ranging sensor 400 is provided. As depicted in FIG. 4, the example optical ranging sensor 400 includes a housing cap 110 comprising a barrier wall dividing the optical ranging sensor 400 into two cavities, a transmission cavity and a receiving cavity. The transmission cavity includes an optical transmitter 102 and an optical reference sensor 104 attached to a substrate 108. The optical transmitter 102 is aligned with a transmission aperture 112 in the housing cap 110. The example optical ranging sensor 400 further includes a receiving opening 114 in the housing cap 110 opening into a receiving cavity comprising an optical receiver 106 attached to the substrate 108 and aligned with the receiving opening 114.

As further depicted in FIG. 4, a shortest aperture axis 210 is defined between the transmission aperture 112 and the reference sensor 104. In addition, a shortest transmitter axis 208 is defined between the optical transmitter 102 and the reference sensor 104.

As further depicted in FIG. 4, the transmission cavity of the optical ranging sensor 400 comprises an example embodiment of a diverted wire bond 402. The diverted wire bond 402 is routed such that a portion of the diverted wire bond 402 intersects at least one shortest aperture axis 210 without intersecting a shortest transmitter axis 208.

As depicted in FIG. 4, the diverted wire bond 402 provides a conductive path between a first contact pad 204 on the substrate 108 and a second contact pad 206 on the optical transmitter 102. The diverted wire bond 402 follows a non-linear path between the first contact pad 204 and the second contact pad 206. For example, if a first axis 404 is defined by a line connecting the first contact pad 204 to the second contact pad 206, a projection of a standard wire bond remains at or near the first axis 404. In other words, a standard wire bond is aligned with the first axis 404. However, as seen in FIG. 4, the diverted wire bond 402 is routed off of the first axis 404 to intersect a shortest aperture axis 210. Thus, the diverted wire bond 402 comprises a portion of the wire bond for which the projection of the diverted wire bond 402 moves away from the first axis 404, and a portion of the wire bond for which the projection of the diverted wire bond moves toward the first axis 404. In this way, the diverted wire bond 402 may be routed to intersect the shortest aperture axis 210. In addition, as depicted in FIG. 4, the diverted wire bond 402 provides a path or window for which at least one shortest transmitter axis 208 is unobstructed. In this way, the diverted wire bond 402 blocks optical noise along the shortest aperture axis 210 while allowing the optical signal along the shortest transmitter axis 208 to reach the reference sensor 104.

Additionally, as depicted in FIG. 4, both the first contact pad 204 and the second contact pad 206 may be positioned on the same side of the shortest aperture axis 210, however, the diverted wire bond 402 may be formed such that the diverted wire bond intersects the shortest aperture axis 210.

As depicted in FIG. 4, the diverted wire bond 402 is longer than a wire bond routed between the first contact pad 204 and the second contact pad 206 on a standard path along the first axis 404. As shown, in some embodiments, the diverted wire bond 402 is thus lengthened to intersect a shortest aperture axis 210.

Referring now to FIG. 5, a perspective view of an example optical ranging sensor 500 is provided. As depicted in FIG. 5, the example optical ranging sensor 500 includes a housing cap 110 comprising a barrier wall dividing the optical ranging sensor 500 into two cavities, a transmission cavity and a receiving cavity. The transmission cavity includes an optical transmitter 102 and an optical reference sensor 104 attached to a substrate 108. The optical transmitter 102 is aligned with a transmission aperture 112 in the housing cap 110. The example optical ranging sensor 500 further includes a receiving opening 114 in the housing cap 110 opening into a receiving cavity comprising an optical receiver 106 attached to the substrate 108 and aligned with the receiving opening 114.

As further depicted in FIG. 5, a shortest aperture axis 210 is defined between the transmission aperture 112 and the reference sensor 104. In addition, a shortest transmitter axis 208 is defined between the optical transmitter 102 and the reference sensor 104.

As further depicted in FIG. 5, the transmission cavity of the optical ranging sensor 500 comprises an example embodiment of a diverted wire bond 502 providing an electrical connection between a first contact pad 204 on the substrate 108 and a second contact pad 206 on the reference sensor 104. The diverted wire bond 502 is routed such that a portion of the diverted wire bond 502 intersects at least one shortest aperture axis 210 without intersecting a shortest transmitter axis 208.

As depicted in FIG. 5, the example diverted wire bond 502 is formed along a path that is oblique (e.g., non-parallel) to the shortest transmitter axis 208. In addition, at least a portion of the diverted wire bond 502 is elevated such that the diverted wire bond 502 intersects the shortest aperture axis 210 without intersecting at least one shortest transmitter axis 208.

As further depicted in FIG. 5, the diverted wire bond 502 is formed along a path that traverses the shortest aperture axis 210. As shown, the first contact pad 204 is on a first side of the shortest aperture axis 210 while the second contact pad 206 is on a second side of the shortest aperture axis 210. Thus, the diverted wire bond 502 crosses the shortest aperture axis 210 to electrically connect the first contact pad 204 to the second contact pad 206. In other words, a plane may be defined intersecting a shortest aperture axis 210 and a shortest transmitter axis 208, dividing the transmission cavity of the optical ranging sensor 500 in two sides. As shown, the first contact pad 204 may be positioned a first side of the defined plane while the second contact pad 206 is positioned on a second side of the defined plane.

As depicted in FIG. 5, the first contact pad 204 is positioned such that the diverted wire bond 502 is longer than a standard wire bond wherein a contact pad is positioned on the substrate 108 directly adjacent to the contact pad 206. As shown, in some embodiments, the diverted wire bond 502 is thus lengthened to intersect a shortest aperture axis 210.

In some embodiments, the diverted wire bond 502 may be configured to transmit electrical signals between the reference sensor 104 and the substrate 108 and subsequently an electrical system comprising the optical ranging sensor 500. In some embodiments, both the first contact pad 204 and the second contact pad 206 may be electrically grounded.

Referring now to FIG. 6, a perspective view of an example over-molded optical ranging sensor 600 is provided. An over-molded optical ranging sensor 600 is designed with a protective molding material 602 molded over the core components of the optical ranging sensor 600. An over-molded optical ranging sensor 600 enhances durability by providing mechanical stability and greater resilience to a harsh external environment. Over-molded optical ranging sensors 600 may be particularly useful in optical ranging sensors 600 utilized in harsh conditions, such as in dusty or wet environments and/or environments in which the optical ranging sensor 600 experiences mechanical stress.

In embodiments in which it may be beneficial to block external noise from entering the optical ranging sensor 600, an opaque material with aperture openings may be formed on the outer surfaces of the molding material 602. For example, in some embodiments, an optical ranging sensor 600 may be formed using a double-molded technique, in which a second, opaque molding layer is applied to the optical ranging sensor 600 to enclose the first molding layer. In some embodiments, the second, opaque layer may be formed using screen printing or other similar technology. In an instance in which an opaque layer is formed, a transmission aperture (e.g., transmission aperture 112) and a receiving opening (e.g., receiving opening 114) may be formed in the opaque layer.

As depicted in FIG. 6, the example over-molded optical ranging sensor 600 includes a barrier wall dividing the over-molded optical ranging sensor 600 into two cavities, a transmission cavity and a receiving cavity. The transmission cavity includes an optical transmitter 102 and an optical reference sensor 104 attached to a substrate 108. Although not depicted in FIG. 6, the optical transmitter 102 is aligned with a transmission aperture (e.g., transmission aperture 112), for example, formed by a second molding layer. The receiving cavity of the example over-molded optical ranging sensor 600 further includes an optical receiver 106 attached to the substrate 108.

As further depicted in FIG. 6, a shortest transmitter axis 208 is defined between the optical transmitter 102 and the reference sensor 104. Although not depicted in FIG. 6, a shortest aperture axis (e.g., shortest aperture axis 210) may be defined between a transmission aperture and the reference sensor 104.

As depicted in FIG. 6, an over-molded optical ranging sensor 600 may further include diverted wire bonds 202 connected between a first contact pad 204 and a second contact pad 206. Any of the diverted wire bonds described herein (e.g., diverted wire bond 202, diverted wire bond 402, diverted wire bond 502) may be utilized in an over-molded optical ranging sensor 600.

Referring now to FIG. 7, a cross-section view of an example electronic system 700 comprising an optical transmission device 704 and a separate optical receiving device 702 is depicted.

As shown in FIG. 7, the example optical receiving device 702 comprises an optical receiver 106 attached to a substrate 108a within a receiving device housing 706. The optical receiver 106 is aligned with a receiving opening 114 and configured to receive optical signals from an external environment through the receiving opening 114. In some embodiments, the optical receiving device 702 may comprise an ambient light sensor, or other device configured to receive and process optical signals.

As further shown in FIG. 7, the example optical transmission device 704 comprises an optical transmitter 102 attached to a substrate 108b within a transmission device housing 708. The optical transmitter 102 is aligned with a transmission aperture 112 and is configured to transmit an optical signal 118 through the transmission aperture 112. In some embodiments, the optical transmission device 704 may comprise a flash light, or other device configured to transmit optical signals 118.

As further depicted in FIG. 7, the optical transmission device 704 and the optical receiving device 702 may be attached adjacent to each other on a system board 714. Although adjacent to each other, in some embodiments, the optical transmission device 704, and the optical receiving device 702, may not be configured to interact with one another. The system board 714 may provide electrical connections to one or more additional electronic components of the electronic system 700 and/or one or more processing devices of the electronic system 700.

As depicted in FIG. 7, unwanted optical noise 122 originating from the optical transmitter 102 of the optical transmission device 704 may be received at the optical receiver 106 of the optical receiving device 702. For example, the optical signal 118 generated by the optical transmitter 102 of the optical transmission device 704 (e.g., flash light) may penetrate the transmission device housing 708 and/or the receiving device housing 706 enabling optical noise 122 to be received at the optical receiver 106 of the optical receiving device 702. Optical noise 122 received at the optical receiver 106 of the optical receiving device 702 may cause the optical receiving device 702 (e.g., ambient light sensor) to generate inaccurate results.

As depicted in FIG. 7, diverted wire bonds 712 are positioned within the transmission device housing 708 of the optical transmission device 704. Diverted wire bonds 712 positioned in the optical transmission device 704 may block the optical signal 118 from penetrating the transmission device housing 708 proximate the adjacent optical receiving device 702. In addition, diverted wire bonds 712 may direct the optical signal 118 toward the transmission aperture 112, thus, enhancing the optical signal 118 transmitted by the optical transmission device 704.

As depicted in FIG. 7, a shortest transmitter axis 716 comprises any straight line extending from any portion of the emission surface of the optical transmitter 102 to any portion of the receiving array of the reference sensor 104. The diverted wire bonds 712 are positioned such that at least a portion of the diverted wire bond 712 intersects the shortest transmitter axis 716. As depicted in FIG. 7, a plurality of diverted wire bonds 712 at varying heights are positioned to intersect the shortest transmitter axis 716 and to redirect the optical signal 118 toward the transmission aperture 112. The diverted wire bonds 712 of the optical transmission device 704 may comprise any of the diverted wire bond types described herein (e.g., diverted wire bond 202, diverted wire bond 402, diverted wire bond 502). As depicted in FIG. 7, the diverted wire bonds 712 comprise a first end on a first side of the optical transmitter 102 and a second end on a second side of the optical transmitter 102 with a lateral portion intersecting the shortest transmitter axis 716. As depicted in FIG. 7, both the first end and the second end are attached to the substrate 108b. In some embodiments, the first end and the second end may both be electrically grounded.

As further depicted in FIG. 7, diverted wire bonds 710 are positioned within the receiving device housing 706 of the optical receiving device 702. Diverted wire bonds 710 positioned in the optical receiving device 702 may block the optical noise 122 from striking the optical receiver 106 in an instance in which the optical noise 122 penetrates the receiving device housing 706 proximate the adjacent optical transmission device 704.

As depicted in FIG. 7, the diverted wire bonds 710 are positioned such that at least a portion of the diverted wire bond 710 intersects the shortest transmitter axis 716. As depicted in FIG. 7, a plurality of diverted wire bonds 710 at varying heights are positioned to intersect the shortest transmitter axis 716 and to redirect the optical noise 122 away from the optical receiver 106. The diverted wire bonds 710 of the optical receiving device 702 may comprise any of the diverted wire bond types described herein (e.g., diverted wire bond 202, diverted wire bond 402, diverted wire bond 502). As depicted in FIG. 7, the diverted wire bonds 710 comprise a first end on a first side of the optical receiver 106 and a second end on a second side of the optical receiver 106 with a lateral portion intersecting the shortest transmitter axis 716. As depicted in FIG. 7, both the first end and the second end are attached to the substrate 108a. In some embodiments, the first end and the second end may both be electrically grounded.

In embodiments, the optical receiving device 702 may comprise at least one first contact pad and at least one second contact pad. Each diverted wire bond 710 may be attached to a respective first contact pad at its first end and to a respective second contact pad at its second end. In embodiments, the first contact pad and the second contact pad may be electrically grounded. In embodiments, the diverted wire bond 710 may be routed on a non-linear path between the first contact pad and the second contact pad to intersect the shortest transmitter axis 716. In embodiments, the first contact pad may be positioned on a first side of the shortest transmitter axis 716 and the second contact pad may be positioned on a second side of the shortest transmitter axis 716. In embodiments, the first contact pad provides the electrical connection to the electrical substrate 108a and the second contact pad provides the electrical connection to the optical receiver 106.

While this detailed description has set forth some embodiments of the present invention, the appended claims cover other embodiments of the present invention which differ from the described embodiments according to various modifications and improvements. For example, one skilled in the art may recognize that such principles may be applied to any electronic device electronic system utilizing optical receivers that may benefit from reduced optical noise. For example, optical ranging sensors, time-of-flight sensors, image capture devices, ambient light sensors, LiDAR systems, medical imaging devices, optical communication devices, and so on.

Within the appended claims, unless the specific term "means for" or "step for" is used within a given claim, it is not intended that the claim be interpreted under 35 U.S.C. 112, paragraph 6.

Use of broader terms such as "comprises," "includes," and "having" should be understood to provide support for narrower terms such as "consisting of," "consisting essentially of," and "comprised substantially of" Use of the terms "optionally," "may," "might," "possibly," and the like with respect to any element of an embodiment means that the element is not required, or alternatively, the element is required, both alternatives being within the scope of the embodiment(s). Also, references to examples are merely provided for illustrative purposes, and are not intended to be exclusive.

## Claims

1. An optical ranging sensor (200, 400, 500) comprising:
an optical transmitter (102) configured to transmit an optical signal (118) through a transmission aperture (112);
an optical reference sensor (104) positioned to receive a portion of the optical signal (118), wherein a shortest aperture axis (210) is defined between the transmission aperture (112) and the optical reference sensor (104), and wherein a shortest transmitter axis (208) is defined between the optical transmitter (102) and the optical reference sensor (104); and
a diverted wire bond (202a, 202b, 402, 502) routed to intersect the shortest aperture axis (210) to block unwanted optical signals (122) transmitted through the transmission aperture (112) from reaching the optical reference sensor (104) without intersecting the shortest transmitter axis (208).

2. The optical ranging sensor (200, 400, 500) of claim 1, further comprising:
a first contact pad (204); and
a second contact pad (206);
wherein the diverted wire bond (202a, 202b, 402, 502) comprises a first end attached to the first contact pad (204) and a second end attached to the second contact pad (206).

3. The optical ranging sensor (200, 500) of claim 2, wherein the first contact pad (204) and the second contact pad (206) are both electrically grounded.

4. The optical ranging sensor (400) of claim 2, wherein the diverted wire bond (402) is routed on a non-linear path between the first contact pad (204) and the second contact pad (206) to intersect the shortest aperture axis (210).

5. The optical ranging sensor (400) of claim 4, wherein the first contact pad (204) provides an electrical connection to an electrical substrate (108) and the second contact pad (206) provides an electrical connection to the optical transmitter (102).

6. The optical ranging sensor (500) of claim 2 or 3, wherein the first contact pad (204) is positioned on a first side of the shortest aperture axis (210) and the second contact pad (206) is positioned on a second side of the shortest aperture axis (210).

7. The optical ranging sensor (500) of claim 6, wherein the first contact pad (204) provides an electrical connection to an electrical substrate (108) and the second contact pad (206) provides an electrical connection to the optical reference sensor (104).

8. The optical ranging sensor (200, 400, 500) of any one of the preceding claims, wherein a portion of the diverted wire bond (202a, 202b, 402, 502) is above a top surface of the optical transmitter (102) and below a bottom surface of the transmission aperture (112).

9. The optical ranging sensor (200, 400, 500) of claim 8, wherein a bottom surface of the diverted wire bond (202a, 202b, 402, 502) is configured to reflect a portion of the optical signal (118) onto the optical reference sensor (104).

10. An electronic system (700) comprising:
an optical transmission device (704) comprising:
an optical transmitter (102); and
a transmission device housing (708);
an optical receiving device (702) adjacent to the optical transmission device (704), the optical receiving device (702) comprising:
an optical receiver (106);
a receiving device housing (706), wherein a shortest transmitter axis (716) is defined between the optical transmitter (102) and the optical receiver (106); and
a diverted receiving device wire bond (710) routed to intersect the shortest transmitter axis (716) to block unwanted optical signals (122) transmitted by the optical transmitter (102) from reaching the optical receiver (106).

11. The electronic system (700) of claim 10, wherein the optical transmission device (704) further comprises:
a diverted transmission device wire bond (712) routed to intersect the shortest transmitter axis (716) to block unwanted optical signals transmitted by the optical transmitter (102) from reaching the optical receiver (106).

12. The electronic system (700) of claim 10 or 11, wherein the optical receiving device (702) further comprises:
a first contact pad; and
a second contact pad;
wherein the diverted receiving device wire bond (710) comprises a first end attached to the first contact pad and a second end attached to the second contact pad.

13. The electronic system (700) of claim 12, wherein the first contact pad and the second contact pad are both electrically grounded.

14. The electronic system (700) of claim 12 or 13, wherein the diverted receiving device wire bond (710) is routed on a non-linear path between the first contact pad and the second contact pad to intersect the shortest transmitter axis (716).

15. The electronic system (700) of any one of claims 12 to 14, wherein the first contact pad is positioned on a first side of the shortest transmitter axis (716) and the second contact pad is positioned on a second side of the shortest transmitter axis (716).

16. The electronic system (700) of claim 15, wherein the first contact pad provides an electrical connection to an electrical substrate (108a) and the second contact pad provides an electrical connection to the optical receiver (106).
